# EUROPÄISCHE PATENTANMELDUNG

(11) **EP 1 259 051 A1**
(43) Veröffentlichungstag der Anmeldung: **20.11.2002**
(21) Anmeldenummer: 02010603.5
(22) Anmeldetag: 10.05.2002
(51) Int. Cl.: H04M 1/2745, G06F 17/27

(54) **Verfahren und Gerät zur automatischen Vervollständigung von Rufnummern mit Datenbankabfrage**

(30) Priorität: 11.05.2001 DE 10123045
(71) Anmelder: Tenovis GmbH & Co. KG, 60326 Frankfurt am Main (DE)
(72) Erfinder: Schmidt, Thorsten, 61118 Bad Vilbel (DE); Steuer, Manfred, 65719 Hofheim (DE)
(74) Vertreter: Patentanwaltskanzlei WILHELM & BECK

(57) **Zusammenfassung**

Erfindungsgemäß wird ein Verfahren zur Eingabe einer Rufnummer in ein Telekommunikationsgerät (1) beziehungsweise ein Telekommunikationsgerät (1) vorgeschlagen, bei dem eine Steuerung (3) bereits während der Zifferneingabe für eine Rufnummer oder Zeicheneingabe für einen Namen aus einem Speicher (4) eine passende vollständige Rufnummer bzw. Namen sucht und auf einer Anzeige (5) ausgibt. Stimmt der Vorschlag nicht mit der gewünschten Rufnummer bzw. dem Namen überein, dann sucht das Telekommunikationsgerät (1) mit fortschreitender Zeicheneingabe eine neue Rufnummer bzw. Namen aus dem Speicher (4). Dadurch wird die Treffsicherheit in vorteilhafter Weise verbessert und insgesamt die Eingabe der gewünschten Rufnummer bzw. des Namens vereinfacht, da in der Regel nur ein Teil der gewünschten Rufnummer des Namens einzugeben ist.

## Beschreibung

Die Erfindung geht aus von einem Verfahren zur Eingabe einer Rufnummer in ein Telekommunikationsgerät beziehungsweise von einem Telekommunikationsgerät selbst, das mit einem Speicher ausgebildet ist, in dem den gespeicherten Rufnummern korrespondierende alphanumerische Namen zugeordnet sind, nach der Gattung der nebengeordneten Ansprüche 1 und 17. Mit zunehmender Komplexität der Technik sind bereits viele Lösungen bekannt geworden, die die Eingabe von Rufnummern vereinfachen sollen. Bekannt sind beispielsweise schon Komfort-Tastentelefone oder Handys, bei denen nicht nur eine Reihe von Rufnummern gespeichert werden kann. Es ist auch vorgesehen, dass zu jeder Rufnummer ein korrespondierender Name, beispielsweise ein Familienname, ein Firmenname, Adresse, Abteilungsbezeichnung oder dergleichen mit abgespeichert werden. Eine Steuerung sucht nach Eingabe der vollständigen Rufnummer aus dem Speicher den korrespondierenden Namen und zeigt diesen meistens zusammen mit der eingegebenen Rufnummer auf einer in das Telekommunikationsgerät eingebauten Anzeige an.

Bekannt ist beispielsweise auch, dass bei einer Telekommunikations-Anlage oder- system, bei dem mehrere Telekommunikationsgeräte zu einem Telekommunikationsnetz zusammengeschaltet sind, ein gemeinsam zu nutzender zentraler Speicher verwendet wird, auf den dann jedes Telekommunikationsgerät einen Zugriff hat. Dieser zentrale Speicher erfüllt dann praktisch die Funktionen, wie sie aus einem konventionellen Telefonbuch bekannt sind. In entsprechend ausgebildeten Telekommunikationsanlagen kann jedoch nicht nur zu einer eingegebenen Rufnummer der korrespondierende Name gesucht werden. Vielmehr ist es auch möglich, zu einem eingegebenen Namen auch die zugehörige Rufnummer zu suchen.

Weiterhin ist bekannt, dass bei bestimmten Telefonfunktionen automatisch der Name des Anzurufenden angezeigt wird. So wird beispielsweise bei einer Rufumleitung, bei der die interne Rufnummer eines gewünschten Teilnehmers eingegeben wird, automatisch der korrespondierende Name ersetzt und angezeigt.

Bekannt ist auch, dass in solchen Fällen, bei denen die Rufnummer des Anrufenden übertragen wird, in dem zentralen Speicher nach dem korrespondierenden Namen gesucht wird. Dieser wird - wenn er zuvor gespeichert wurde - in der Regel zusammen mit der Rufnummer angezeigt.

Eine weitere bekannte Lösung besteht auch darin, Rufnummern so abzuspeichern, dass sie beispielsweise mit Direktwahltasten oder als Kurzwahlnummern aufgerufen werden können. Dieses funktioniert aber nur, wenn die gespeicherten Rufnummern zuvor diesen Tasten zugeordnet wurden. Bei seltener benutzten Rufnummern versagt diese Methode. Auch ist die Anzahl der verfügbaren Kurzwahltasten beschränkt, so dass auch aus diesem Grund nicht beliebig viele Kurzwahlnummern belegt werden können.

Bei allen zuvor genannten Verfahren ist ungünstig, dass die Steuerung des Telekommunikationsgerätes oder des -systems nur dann aktiv wird, wenn die vollständige Rufnummer bereits eingegeben wurde. Diese Arbeit bleibt dem Anrufenden in jedem Fall überlassen. Bei den heutigen vielfach sehr langen Rufnummern mit Prefix, Länder- und Ortsvorwahl oder Apparatenummern (Extension) ergeben sich sehr leicht Eingabefehler, die dann naturgemäß zu unerwünschten und kostenpflichtigen Fehlverbindungen führen können.

Das erfindungsgemäße Verfahren zur Eingabe einer Rufnummer in ein Telekommunikationsgerät beziehungsweise das Telekommunikationsgerät mit den kennzeichnenden Merkmalen der nebengeordneten Ansprüche 1 und 17 hat demgegenüber den Vorteil, dass bereits während der Eingabe der Rufnummer und/ oder eines Namens das Telekommunikationsgerät mit der Suche nach einer möglichen Rufnummer beginnt und einen entsprechenden Vorschlag für eine vollständige Rufnummer beziehungsweise einen Namen auf einer Anzeige ausgibt. Dadurch wird die Eingabe der Rufnummer und/oder des Namens durch die Steuerung des Telekommunikationsgerätes unterstützt, so dass im einfachsten Fall nur sehr wenige Ziffern von der Rufnummer einzugeben sind. Der Wahlvorgang wird somit vereinfacht. Als besonders vorteilhaft wird dabei angesehen, dass auch durch die Ausgabe des korrespondierenden Namens eines Anzurufenden die Fehlerrate bei der Zifferneingabe verringert wird. Dadurch wird in vorteilhafter Weise nicht nur die Arbeit für die Eingabe der Rufnummer reduziert und erleichtert, sondern auch die Eingabe zuverlässiger durchgeführt.

Durch die in den abhängigen Ansprüchen aufgeführten Maßnahmen sind vorteilhafte Weiterbildungen und Verbesserungen des in den nebengeordneten Ansprüchen 1 und 17 angegebenen Verfahrens zur Eingabe einer Rufnummer beziehungsweise des Telekommunikationsgerätes möglich. Als besonders vorteilhaft wird dabei ansehen, dass insbesondere in solchen Fällen, bei denen mehrere Rufnummern mit einer gleichen Zifferfolge beginnen, auch mehrere alternative Rufnummern gesucht und gleichzeitig auf der Anzeige ausgegeben werden. Dadurch erhält der Anrufende schon nach der Eingabe von nur wenigen Zeichen alternative mögliche Rufnummern und/oder Namen angezeigt, aus denen er seine gewünschte Rufnummer bzw. Namen dann einfach auswählen kann.

Eine sehr günstige Lösung wird auch darin gesehen, dass das Telekommunikationsgerät mit fortschreitender Zifferneingabe seine Vorschläge für Rufnummern überprüft. Auf diese Weise wird mit jedem zusätzlich eingegebenen Zeichen die Treffsicherheit für die gewünschte Rufnummer bzw. des Namens erhöht.

Eine besonders schnelle Auswahl der gespeicherten Rufnummern und Namen ist vorteilhaft durch eine Tabelle gegeben, die in Form eines Telefonbuches aufgebaut sein kann. Derartige Tabellen sind beispielsweise alphabetisch gegliedert und leicht auf einer Compact Disc (CD) speicherbar.

Um die Auswahl einer Rufnummer bzw. Namen aus der Gruppe der vorgeschlagenen Rufnummern zu vereinfachen, kann eine spezielle Funktionstaste am Telekommunikationsgerät vorgesehen sein, mit der die gewünschte Rufnummer bzw. Name markiert und ausgewählt wird.

Eine günstige alternative Lösung zur Auswahl einer Rufnummer wird auch in einer Cursorsteuerung gesehen, die durch die Funktionstaste betätigt wird.

Vorteilhaft ist weiterhin, dass sukzessive weitere Ziffern eingegeben werden, wenn die vorgeschlagenen Rufnummern und/oder Namen nicht der gewünschten Rufnummer bzw. Namen entsprechen. Dadurch erhält das Telekommunikationsgerät die Möglichkeit, nach neuen Rufnummern oder Namen zu suchen, die dann der gewünschten Rufnummer näher kommen.

Um einen eventuell ungültigen Wahlvorgang zu vermeiden, weil die eingegebene Rufnummer von dem Telekommunikationsgerät nicht vollständig erkannt wurde, erfolgt die Eingabe der Rufnummer bzw. des Namens vorteilhaft bei aufliegendem Handapparat.

Da die gewünschte Rufnummer bzw. Namen zeichenweise eingegeben wird, kann die vorgeschlagene Rufnummer entsprechend überschrieben werden. Die vorgeschlagene Rufnummer bzw. Name wird dadurch ungültig und das Telekommunikationsgerät kann nach einer neuen Rufnummer oder Namen suchen.

Eine besonders günstige Lösung zur Vereinfachung der Eingabeprozedur ergibt sich auch dadurch, dass eine vorgeschlagene Rufnummer oder Name durch Aufnahme des Handapparates markiert und bestätigt wird. Dieses ist dann für die Steuerung auch das Signal, den Verbindungsaufbau zu starten.

Vorteilhaft erscheint auch, dass die Suche nach der gewünschten vollständigen Rufnummer in wenigstens einem weiteren Speicher durchgeführt wird, der nicht direkt dem aktuellen Speicher des Telekommunikationsgerätes zugeordnet ist. Dadurch wird in einfacher Weise die Suche automatisch auf weitere verfügbare Speicher ausgedehnt, ähnlich wie eine manuelle Suche in einem örtlichen, nationalen oder globalen Telefonbuch.

Die Suche nach einer Rufnummer oder einem Namen kann dabei praktisch global in allen zugänglichen Speichern einer Telekommunikationsanlage, eines Anlagenverbundes, in einem öffentlichen oder privaten Netz, national oder international durchgeführt werden, so dass eine sehr umfangreiche Recherche möglich ist. Eine umständliche und kostenintensive Telefonauskunft, wie sie heute noch notwendig ist, kann dann vorteilhaft entfallen.

Natürlich kann bei entsprechend erweiterten Protokollen vorteilhaft auch in unterschiedlichen Netzen wie analogen oder digitalen Netzen wie in ISDN- oder LAN- Netzen gesucht werden.

Als besonders vorteilhaft wird angesehen, dass eine ausgewählte Rufnummer und/oder Name durch einfachen Tastendruck in den eigenen Speicher oder einen zugeordneten Speicher übernommen werden kann, so dass sie dann permanent und direkt zur Verfügung steht. Ein umständliches Übertragen beispielsweise durch eine Neueingabe entfällt dadurch in vorteilhafter Weise.

In alternativer Ausgestaltung der Erfindung ist vorgesehen, die ausgewählte Rufnummer beziehungsweise Namen automatisch in dem zugeordneten Speicher zu speichern. Dieses Vorgehen stellt eine weitere Vereinfachung für das Speichern einer gefundenen Rufnummer oder eines Namens dar.

Vorteilhaft ist weiterhin, dass bei einem ankommenden Ruf, bei dem beispielsweise auf der Anzeige des Telekommunikationsgerätes nur die Rufnummer angezeigt wird, automatisch auch nach dem Namen oder weiteren Informationen gesucht wird. Für den Angerufenen ist somit schon im Vorfeld erkennbar, wer ihn gerade anrufen möchte, ohne dass er das Gespräch entgegennehmen muss, um zu erkunden, wer der Anrufer sei.

Vorteilhaft für das Telekommunikationsgerät ist auch die Verbindung mit einer Telekommunikations-Anlage, da die Telekommunikations-Anlage einen gemeinsamen Speicher für alle angeschlossenen Telekommunikationsgeräte aufweist. Dadurch haben alle Telekommunikationsgeräte Zugriff auf die gleiche Datenbasis, separate Speicher werden dadurch weitgehend überflüssig. Das hat den weiteren Vorteil, dass bei einer Aktualisierung der Daten alle angeschlossenen Telekommunikationsgeräte stets Zugriff auf den neuesten Datenbestand haben.

Ein weiterer Vorteil des Telekommunikationsgerätes wird auch darin gesehen, dass beispielsweise durch einfachen Druck auf eine entsprechend ausgebildete Funktionstaste eine Rufnummer und/oder Name gegebenenfalls mit weiteren Informationen aus einem fremden Speicher in den eigenen Speicher kopiert und übernommen werden kann.

Eine günstige alternative Lösung besteht auch in einer automatischen Übernahme der gefundenen Rufnummer und/oder des Namens in den eigenen Speicher.

Der Erfindung liegt die Aufgabe zu Grunde, die Eingabe einer Rufnummer in ein Telekommunikationsgerät zu vereinfachen.

Diese Aufgabe wird mit den Merkmalen der nebengeordneten Ansprüche 1 und 17 gelöst.

Ein Ausführungsbeispiel der Erfindung ist in der Zeichnung dargestellt und wird in der nachfolgenden Beschreibung näher erläutert.
Figur 1 zeigt ein Blockschaltbild eines Telekommunikationsgerätes,
Figur 2 zeigt eine Flussdiagramm,
Figur 3 zeigt eine Tabelle,
Figur 4 zeigt in schematischer Darstellung ein Telekommunikationsnetz und
Figur 5 zeigt mehrere Telekommunikations-Endgeräte mit zugeordneten Speichern.

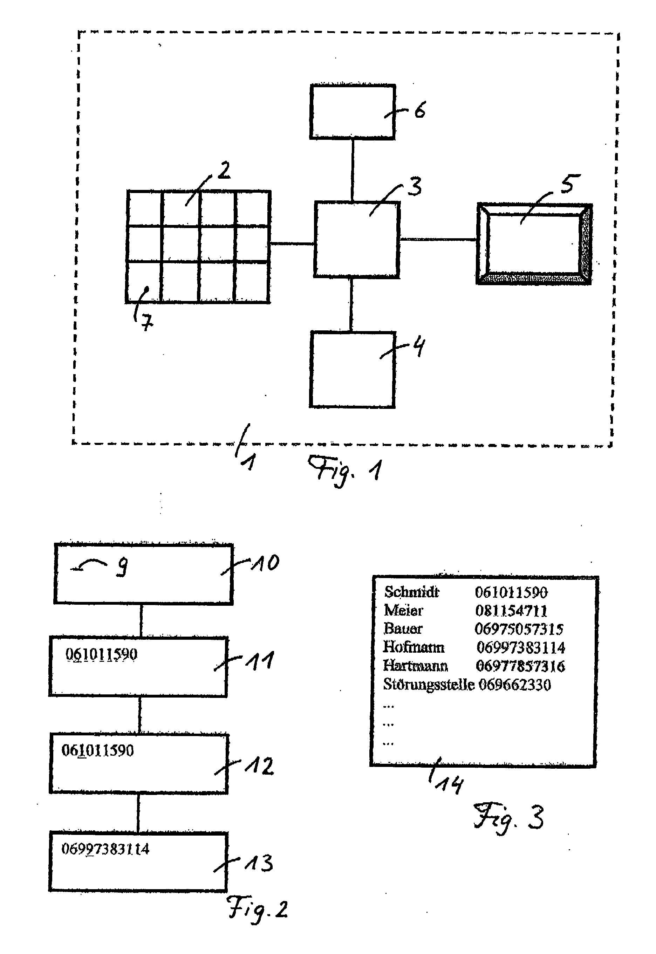

Das Blockschaltbild der Figur 1 zeigt in schematischer Darstellung ein Telekommunikationsgerät 1, das beispielsweise als stationäres Tastentelefon oder als Funktelefon wie Handy oder dergleichen ausgebildet ist. In alternativer Ausgestaltung der Erfindung kann es auch mit einem Computer gekoppelt sein, der die entsprechenden Such-, Steuer- und Anzeigefunktionen übernimmt. Das Telekommunikationsgerät 1 ist vorzugsweise drahtgebunden oder über ein Funknetz mit weiteren (nicht dargestellten) Telekommunikationsgeräten 1 verbunden. Derartige Telekommunikationssysteme oder -anlagen sind per se bekannt, so dass sie nicht in allen Einzelheiten beschrieben werden müssen.

In Figur 1 wurden nur die Wesentlichen Baugruppen dargestellt, auf die sich die Erfindung im Einzelnen bezieht. Zur Eingabe von Rufnummern und/oder auch Namen in alphanumerischen Zeichen ist eine Tastatur 2 vorgesehen, die je nach Ausstattung des Telekommunikationsgerätes 1 mehr oder weniger viele Tasten aufweist. Zusätzlich können eine oder mehrere entsprechend ausgebildete Funktionstasten 7 vorgesehen sein, mit denen die Bedienung des Telekommunikationsgerätes 1 erleichtert wird. Beispielsweise kann mit den Funktionstasten 7 die Speicherung von Rufnummern und Namen, eine Rufweiterleitung, Kurzwahltasten, Lauthören usw. gesteuert werden.

Die Tastatur 2 ist mit einer Steuerung 3 verbunden, die beispielsweise bei einem Komforttelefon mit einem Computerchip, Arbeitspeicher, einem Steuerprogramm und dergleichen ausgebildet ist. Die Steuerung 3 ist mit einem Speicher 4 verbunden, in dem die Rufnummern und/oder die korrespondierenden Namen speicherbar sind.

Alternativ ist vorgesehen, in einem Telekommunikationssystem einen gemeinsamen Speicher 4 anzulegen, in dem die gespeicherten Daten tabellarisch in Form eines Telefonbuches abgelegt sind. Derartige Speicher sind als Massenspeicher, beispielsweise als Plattenspeicher, Compact Disc (CD) usw. per se bekannt. Mit Hilfe von geeigneten Softwareprogrammen können die gespeicherten Daten in geeigneter Weise nach Rufnummern Namen und/oder weiteren Informationen durchsucht werden.

Um eingegebene und ausgegebene Rufnummern und Daten sichtbar zu machen und besser kontrollieren zu können, ist die Steuerung 3 mit einer Anzeige 5 verbunden, die je nach Ausführungsform als ein- oder mehrzeiliges LCD-Display oder als üblicher Monitor ausgebildet sein kann. An Stelle der LCD-Anzeige kann die Anzeige 5 auch als Lumineszenz- Anzeige oder sonstige optische Anzeige ausgebildet sein. Für die Sprachein- und -ausgabe ist des weiteren die Steuerung 3 mit einem Handapparat 6 verbunden, der üblicherweise ein Mikrofon und einen Lautsprecher (Ohrhörer) enthält. Natürlich ist in alternativer Ausgestaltung der Erfindung der Handapparat 6 auch in das Telekommunikationsgerät 1 integriert eingebaut und beispielsweise über eine der erwähnten Funktionstasten 7 aktivierbar.

Die Funktionsweise des Verfahrens zur automatischen Vervollständigung einer unvollständig eingegebenen Rufnummer wird an Hand der Figuren 2 und 3 näher erläutert. Grundsätzlich ist dabei vorgesehen, dass zur Vervollständigung der eingegebenen Rufnummer und/oder des Namens die Steuerung selbsttätig in einem oder mehreren verfügbaren Speichern nach geeigneten Rufnummern bzw. Namen sucht. Dabei werden die Rufnummern und Namen als Treffer ausgegeben, die wenigstens der eingegebenen Zeichenfolge entsprechen.

Figur 2 zeigt zunächst ein Flussdiagramm für den Verfahrensablauf bei der Eingabe einer gewünschten Rufnummer. In Position 10 zeigt eine Markierung 9 (Cursor) auf der Anzeige 5 an, dass nun die erste Ziffer der gewünschten Rufnummer eingegeben werden kann. Die Initialisierung des Cursors 9 erfolgt beispielsweise automatisch bei der Eingabe einer ersten Ziffer oder durch Druck auf eine spezielle Funktionstaste 7.

Wurde zum Beispiel als erste Ziffer eine "0" eingegeben, dann springt der Cursor 9 um eine Stelle weiter nach rechts und wartet auf die Eingabe der nächsten Ziffer. Gleichzeitig startet die Steuerung 3 den Suchlauf in dem Speicher 4 nach Rufnummern, die mit der Ziffer "0" beginnen. In Position 11 wurde beispielsweise die Rufnummer "061011590" gefunden, die nun auf der Anzeige 5 zu sehen ist. Im allgemeinen sind in dem Speicher 4 sehr viele Rufnummern gespeichert, die mit der Ziffer "0" beginnen. Auf der Anzeige 5 können dann einige, zum Beispiel in aufsteigender Reihenfolge dargestellt werden. Da nicht alle Rufnummern gleichzeitig dargestellt werden können, kann mit einer der Funktionstasten 7 die gefundene Liste mit den vorgeschlagenen Rufnummern entweder seitenweise oder zeilenweise weitergeschaltet oder gescrollt werden. Mit einer weiteren Funktionstaste 7 kann dann eine der vorgeschlagenen Rufnummern markiert und als gewünschte Rufnummer ausgewählt werden.

Es ist auch vorgesehen, dass zu den Rufnummern gleichzeitig der korrespondierende Name gegebenenfalls mit weiteren Informationen angezeigt wird.

In alternativer Ausgestaltung der Erfindung werden beispielsweise die vorgeschlagenen Rufnummern in alphabetischer Reihenfolge der Namen sortiert und dann auf den Anzeige 5 dargestellt.

Aus Übersichtlichkeitsgründen wurde in dem Flussdiagramm der Figur 2 jedoch nur eine vorgeschlagene Rufnummer dargestellt, die für die weiteren Erläuterungen herangezogen wird.

Unabhängig von dem zuvor beschriebenen Verfahren kann an der Cursorposition, die in unserem Beispiel durch die unterstrichene Ziffer "6" markiert ist, die nächste Ziffer eingegeben und somit die vorgeschlagene Rufnummer überschrieben wird. Dies ist dann notwendig, wenn die gewünschte Rufnummer nicht in der Liste der vorgeschlagenen Rufnummern enthalten ist. Sinnvoll ist dies auch, wenn die Treffsicherheit nicht sehr groß ist und zu viele Rufnummern vorgeschlagen werden. Mit zunehmender sukzessiver Eingabe von Ziffern der gewünschten Rufnummer wird die Trefferquote verbessert und es werden immer weniger Rufnummern vorgeschlagen, die mit der gleichen Ziffernfolge beginnen. Dadurch wird die Auswahl für die gewünschte Rufnummer vorteilhaft vereinfacht.

Nach Bestätigung der Ziffer "6" ist in Position 12 der Cursor 9 auf die dritte Position gesprungen, so dass er jetzt die Ziffer 1 markiert. Die Bestätigung einer Ziffer kann entweder durch Eingabe der markierten Ziffer oder durch manuelles Weiterschalten des Cursors 9 mit einer der Funktionstasten 7 erfolgen.

Es wird nun angenommen, dass die vorgeschlagene Rufnummer nicht der gewünschten Rufnummer entspricht. Daher wird in Position 13 die Ziffer "1" mit der Ziffer "9" überschrieben. Der Cursor 9 springt nun auf die vierte Position. Gleichzeitig sucht die Steuerung 3 aus dem Speicher 4 eine neue Rufnummer, die mit der Ziffernfolge 069 beginnt. Es wird angenommen, dass die Steuerung 3 nun die Rufnummer "06997383114" gefunden hat, die auf der Anzeige 5 dargestellt wird. Der Cursor 9 steht dabei unter der zweiten Ziffer "9". Falls die vorgeschlagene Rufnummer noch nicht der gewünschten Rufnummer entspricht, kann nun die Ziffer "9" überschrieben werden.

Dieses Verfahren wird solange fortgeführt, bis die Steuerung 3 eine Rufnummer vorschlägt, die der gewünschten Rufnummer entspricht. Wurde diese gefunden, dann kann der Wahlvorgang beispielsweise durch Abnehmen des Handapparates 6 oder durch Drücken einer Funktionstaste 7 eingeleitet werden.

Vorzugsweise wird der Suchvorgang mit aufgelegtem Handapparat 6 durchgeführt und der Wahlvorgang erst dann gestartet, wenn ein entsprechendes Signal eingegeben wurde.

In alternativer Ausgestaltung der Erfindung ist vorgesehen, dass auch ein alphanumerischer Namen in Form von einzelnen Buchstaben eingegeben werden kann. Als Name kann ein Rufname, ein Firmenname, eine Adresse oder ein geeignetes Suchwort verwendet werden. Das setzt jedoch voraus, dass das Telekommunikationsgerät eine geeignete Eingabetastatur aufweist. Der Suchablauf erfolgt dann in der gleichen Weise, wie er zuvor bei der Zifferneingabe beschrieben wurde.

Figur 3 zeigt eine Tabelle 14, wie sie im Speicher 4 abgelegt sein kann. Sie enthält beispielsweise alle Rufnummern mit den korrespondierenden Namen, gegebenenfalls weitere Informationen wie Adressen, Firmen- oder Abteilungsbezeichnungen, Titel, Anrede, Notdienste usw. Diese Tabelle wird auszugsweise in Abhängigkeit von der eingegebenen Ziffernfolge auf der Anzeige 5 dargestellt, wobei vorzugsweise hier die Darstellung aus Übersichtlichkeitsgründen auf die notwendigsten Informationen wie der Rufnummer und dem korrespondierenden Namen beschränkt ist. Durch Betätigung einer Funktionstaste 7 können die weiteren gespeicherten Informationen jedoch zusätzlich eingeblendet werden.

Vom Prinzip her ist die Anzahl der gespeicherten Rufnummern mit den korrespondierenden Namen nicht beschränkt und richtet sich im wesentlichen nach der Art und der Größe des verwendeten Speichers 4.

Figur 4 zeigt in schematischer Darstellung ein per se bekanntes Telekommunikationsnetz mit unterschiedlichen Telekommunikationsgeräten 44 bis 48, mit denen beliebige Teilnehmer telefonieren können. Mit einer (örtlichen) Telekommunikations-Anlage 41 sind beispielsweise zwei Funktelefone 44 drahtlos verbunden. Diese Funktelefone 44 weisen ebenso wie die Telekommunikations-Anlage 41 entsprechende Antennen 43 auf, über die beispielsweise nach dem DECT-Standard (Digital Enhanced Cordless Telekommunication) eine Verbindung aufgebaut werden kann. An die Telekommunikations-Anlage 41 sind in unserem Ausführungsbeispiel zwei weitere Telefone 45, 46 über eine übliche Drahtverbindung angeschlossen. Diese Telefone können analog oder digital arbeiten und beliebigen Komfortklassen entsprechen. Ein weiteres Telefon 47 ist über ein digitales Netz wie LAN (Local Area Network) angeschlossen. Über die Tasten dieser Telefone können beispielsweise durch Mehrfachdrücken häufig auch alphanumerische Zeichen eingegeben bzw. ausgewählt werden, wenn dies bisweilen auch mühsam erscheint.

Des weiteren ist auch ein Telefon-Computer 48 vorgesehen, der mit einem Handapparat 49 verbunden ist. Der Telefon-Computer 48 ist seinerseits über eine LAN-Schnittstelle oder eine ISDN-Schnittstelle (Integrated Services Digital Network) mit der Telekommunikations-Anlage 41 verbunden. Der Telefon-Computer 48 weist in der Regel eine (nicht dargestellte) Tastatur auf, mit der in einfacher Weise nicht nur Rufnummern, sondern auch alphanumerische Zeichen wie Namen, Adressen oder dergleichen eingegeben werden können. Die einzelnen Telekommunikationsgeräte 44-48 sind per se bekannt und müssen daher nicht näher erläutert werden.

Die Telekommunikations-Anlage 41 weist neben einer Steuerung, Netzwerkschaltern usw. noch einen Server 42 auf, der im wesentlichen als Speicher ausgebildet ist und den angeschlossenen Telekommunikationsgeräten 44 bis 48 zur Verfügung steht. In diesem Speicher sind in Form eines Telefonbuches Rufnummern und/oder Namen mit gegebenenfalls ergänzenden Informationen abgelegt. Der Speicher kann dabei so aufgebaut sein, dass jedem Telekommunikationsgerät 44 bis 48 ein eigener Speicherbereich zugewiesen ist.

Erfindungsgemäß ist jedoch vorgesehen, das die Suche nach einer Rufnummer und/oder einem Namen nicht nur in dem eigenen Speicher, sondern auch in weiteren Speichern, vorzugsweise in allen freigegebenen Speichern ermöglicht wird. Dazu ist jedoch eine entsprechende Protokollerweiterung erforderlich.

Die in unserem Beispiel örtliche Telekommunikations-Anlage 41 ist des weiteren über ein Telekommunikationsnetz 50 mit einer oder mehreren Telekommunikationsgeräten oder Telekommunikations-Anlagen 51 verbunden. Diese Telekommunikations-Anlagen 51 sind ähnlich wie zuvor beschrieben aufgebaut und weisen ebenfalls entsprechende Speicher auf, in denen ebenfalls Rufnummern mit zugeordneten Namen und weiteren Informationen gespeichert sind. Bei der Suche in diesen Speichern erhält der Teilnehmer ein globales Telefonbuch, in dem er seine gewünschte Rufnummer und/oder Namen suchen kann.

Bei der praktischen Suche einer Rufnummer oder eines Namens wird vorteilhaft so vorgegangen, dass der Teilnehmer zunächst in seinem eigenen Speicher oder seinem Speicherbereich seiner örtlichen Telekommunikations-Anlage 41 sucht. Wenn die gewünschte Rufnummer oder Name nicht gefunden wurde, werden alle freigegebenen oder für eine Gruppe freigegebenen Speicherbereiche der Anlage durchsucht. Führt diese Suche noch nicht zu Ziel, werden vorzugsweise mit abnehmender Priorität Speicher anderer Telekommunikations-Anlagen 51 durchsucht. Dies können beispielsweise Telekommunikations-Anlagen in einem Netzverbund, das gesamte nationale und internationale Netz, analoge Netze, digitale Netze wie ISDN, LAN oder dergleichen sein.

Erscheint die gewünschte Rufnummer oder der Name, kann diese mittels einfachem Druck auf eine entsprechend vorprogrammierte Funktionstaste übernommen und im eigenen Speicher abgelegt werden. Alternativ ist vorgesehen, diesen Vorgang auch zu automatisieren.

Da das Suchen in den Speichern aller Telekommunikationsgeräte 44 bis 48 insbesondere wegen langer Laufzeiten und Antwortzeiten aufwändig und langsam sein kann, werden vorzugsweise die zentralen Speicher, zum Beispiel Server 42, von Telekommunikations-Anlagen 41, 51 durchsucht.

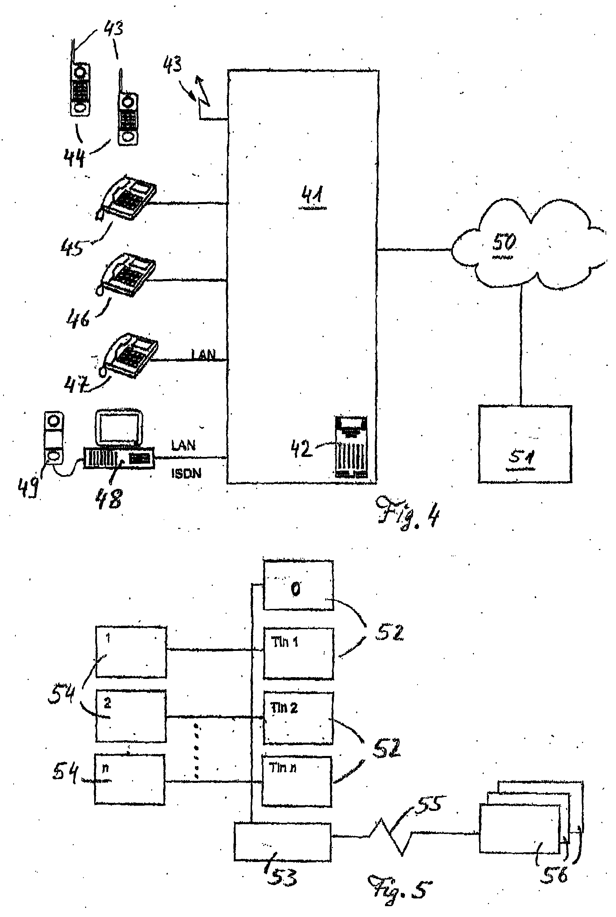

Ein entsprechender Ablauf für die Suche nach einer Rufnummer oder einen Namen ist beispielhaft in Figur 5 dargestellt. Die Endgeräte 54 (Telekommunikationsgeräte) 1, 2...n sind mit entsprechenden Speichern Tln 1, Tln 2...Tln n vorzugsweise eines Zentralspeichers 52 verbunden. Dieser Zentralspeicher 52 weist noch einen allgemeinen Rufnummernspeicher (Speicher 0) auf, in dem auch die zugeordneten Namen und gegebenenfalls zusätzliche Informationen mit abgelegt sind. Alternativ können diese Speicher Tln 1, Tln 2...Tln n auch direkt bei den Endgeräten angeordnet sein.

Sowohl die Teilnehmer bezogenen Speicher Tln 1, Tln 2...Tln n als auch der allgemeine Speicher 0 weisen des weiteren nicht öffentliche Bereiche auf, in denen vertrauliche Daten abgelegt sind. In den vertraulichen Daten kann natürlich nicht gesucht werden.

Gesteuert werden die einzelnen Speicher Tln 1, Tln 2...Tln n, 0 von einer Steuereinheit 53, die per se bekannt ist. Die Steuereinheit 53 ist über ein Telekommunikationsnetz 55 mit wenigstens einer weiteren Telekommunikations-Anlage 56 verbunden, die ebenfalls entsprechende Speicher aufweist, in denen öffentlich gesucht werden kann.

In weiterer Ausgestaltung der Erfindung ist vorgesehen, dass in solchen Fällen, bei denen bei einem ankommenden Ruf nur die Rufnummer angezeigt wird, in den verschiedenen Speichern auch nach dem Namen gesucht wird, wenn dieser Name nicht vorher schon gespeichert war. Das gleiche gilt natürlich auch umgekehrt, wenn nur der Name angezeigt wurde. Des weiteren ist vorgesehen, auch den speichernden Teilnehmer im eigenen Speicher festzuhalten. Dadurch kann auf einfache Weise zu diesem Teilnehmer ein Rückruf gestartet werden oder ein Gespräch an diesen weitergeleitet werden.

## Patentansprüche

1. Verfahren zur Eingabe einer Rufnummer und/oder eines Namens in ein Telekommunikationsgerät (1), wobei das Telekommunikationsgerät (1) einen Speicher (4) aufweist, in dem gespeicherte Rufnummern enthalten sind, denen gegebenenfalls korrespondierende alphanumerische Namen, Adressen oder dergleichen zugeordnet sind, und wobei das Telekommunikationsgerät (1) zu einer eingegebenen Rufnummer den korrespondierenden Namen aus dem Speicher (4) ausliest und auf einer Anzeige (5) ausgibt, **dadurch gekennzeichnet, dass** das Telekommunikationsgerät (1) bereits während der Eingabe der noch unvollständigen Rufnummer und/oder eines Namens die Suche nach der vollständigen Rufnummer und/oder dem Namen beginnt und dass das Telekommunikationsgerät (1) einen Vorschlag für eine vollständige Rufnummer und/oder den Namen auf der Anzeige (5) ausgibt, die die eingegebene Ziffernfolge und/oder den Namen ergänzt.

2. Verfahren nach Anspruch 1, **dadurch gekennzeichnet, dass** das Telekommunikationsgerät (1) gleichzeitig wenigstens eine weitere Rufnummer und/oder einen weiteren Namen ausgibt.

3. Verfahren nach Anspruch 1 oder 2, **dadurch gekennzeichnet, dass** das Telekommunikationsgerät (1) mit fortschreitender, dem Vorschlag nicht entsprechenden Zeicheneingabe wenigstens eine neue Rufnummer und/oder Namen ausgibt.

4. Verfahren nach einem der vorhergehenden Ansprüche, **dadurch gekennzeichnet, dass** das Telekommunikationsgerät (1) den Namensvorschlag aus einer Tabelle (14) eines gespeicherten Telefonbuches auswählt.

5. Verfahren nach einem der vorhergehenden Ansprüche, **dadurch gekennzeichnet, dass** mittels einer Funktionstaste (7) von den auf der Anzeige (5) dargestellten Rufnummern und/oder Namen die gewünschte Rufnummer beziehungsweise der Name ausgewählt wird.

6. Verfahren nach Anspruch 5, **dadurch gekennzeichnet, dass** die Funktionstaste (7) eine Cursorsteuerung betätigt.

7. Verfahren nach einem der vorhergehenden Ansprüche, **dadurch gekennzeichnet, dass** sukzessive weitere Ziffern oder Zeichen eingegeben werden, wenn die vorgeschlagene Rufnummer und/oder Name nicht der gewünschten Rufnummer entspricht.

8. Verfahren nach einem der vorhergehenden Ansprüche, **dadurch gekennzeichnet, dass** die Zeichen bei aufliegendem Handapparat (6) eingegeben werden.

9. Verfahren nach einem der vorhergehenden Ansprüche, **dadurch gekennzeichnet, dass** ein falscher Vorschlag für eine Rufnummer oder Namen überschrieben wird.

10. Verfahren nach einem der vorhergehenden Ansprüche, **dadurch gekennzeichnet, dass** eine vorgeschlagene Rufnummer oder Name durch Aufnahme des Handapparates (6; 49) markiert und/oder gespeichert wird.

11. Verfahren nach einem der vorhergehenden Ansprüche, **dadurch gekennzeichnet, dass** die Suche nach der gewünschten vollständigen Rufnummer und/oder dem Namen in wenigstens einem weiteren Speicher (52) durchgeführt wird, der nicht direkt dem aktuellen Speicher des Telekommunikationsgerätes (1;44 bis 48) zugeordnet ist.

12. Verfahren nach Anspruch 11, **dadurch gekennzeichnet, dass** die Suche in allen zugänglichen Speichern (52) einer Telekommunikations-Anlage (41), eines Anlagenverbundes, in einem öffentlichen oder privaten Netz (50), national und/oder international durchgeführt wird.

13. Verfahren nach einem der Ansprüche 11 oder 12, **dadurch gekennzeichnet, dass** die Suche in unterschiedlichen Netzen (50) wie analogen oder digitalen Netzen, vorzugsweise ISDNoder LAN-Netzen durchgeführt wird.

14. Verfahren nach einem der Ansprüche 11 bis 13, **dadurch gekennzeichnet, dass** eine ausgewählte vollständige Rufnummer und/oder Name gegebenenfalls mit weiteren Informationen durch Druck auf eine Funktionstaste (7) in den eigenen Speicher (4) beziehungsweise einen zugeordneten Zentralspeicher (52) abgelegt wird und künftig aus diesem abgerufen werden kann.

15. Verfahren nach einem der Ansprüche 11 bis 13, **dadurch gekennzeichnet, dass** die ausgewählte vollständige Rufnummer und/oder Name gegebenenfalls mit weiteren Informationen automatisch in dem zugeordneten Speicher (52) gespeichert wird.

16. Verfahren nach einem der Ansprüche 11 bis 15, **dadurch gekennzeichnet, dass** bei einem ankommenden Ruf, bei dem nur die Rufnummer des Anrufers auf der Anzeige (5) angezeigt wird, zusätzlich nach dem Namen des Anrufers gesucht und dessen Namen gegebenenfalls mit weiteren Informationen angezeigt und/oder gespeichert wird.

17. Telekommunikationsgerät zur Durchführung des Verfahren nach einem der vorhergehenden Ansprüche, mit einem Speicher (4), in dem beispielsweise den Rufnummern korrespondierende Namen, Adressen oder dergleichen abgelegt sind, mit einer Steuerung (3) zur Auswahl des korrespondierenden Namens und mit einer Anzeige (5), **dadurch gekennzeichnet, dass** die Steuerung (3) ausgebildet ist, bereits während der Eingabe einer Ziffernfolge und/oder eines Namens eine vollständige Rufnummer in wenigstens einem weiteren Speicher (4;52) einer Telekommunikationsanlage (41,51) und/oder eines -netzes (50) zu suchen und entsprechende Rufnummern und/oder Namen, die mit der eingegebenen Zeichenfolge beginnen, auszuwählen und auf der Anzeige (5) darzustellen.

18. Telekommunikationsgerät nach Anspruch 17, **dadurch gekennzeichnet, dass** auf der Anzeige (5) weitere Rufnummern und/oder Namen in Form einer Tabelle (14) darstellbar sind.

19. Telekommunikationsgerät nach einem der Ansprüche 17 oder 18, **dadurch gekennzeichnet, dass** das Telekommunikationsgerät (1; 44 bis 48) mit einer Telekommunikations-Anlage (41) in Verbindung steht.

20. Telekommunikationsgerät nach einem der Ansprüche 17 bis 19, **dadurch gekennzeichnet, dass** das Telekommunikationsgerät (1; 44 bis 48) eine Funktionstaste (7) aufweist, mit der eine noch nicht gespeicherte Rufnummer und/oder Name, die aus einem anderen Speicher übernommen wurde, gegebenenfalls mit weiteren Informationen speicherbar ist.

21. Telekommunikationsgerät nach einem der Ansprüche 17 bis 19, **dadurch gekennzeichnet, dass** das Telekommunikationsgerät (1;44 bis 48) ausgebildet ist, eine noch nicht gespeicherte Rufnummer und/oder Namen, die aus einem anderen Speicher übernommen wurde, gegebenenfalls mit weiteren Informationen automatisch zu speichern.
